# EUROPEAN PATENT SPECIFICATION

(11) **EP 3 381 021 B1**
(45) Date of publication and mention of the grant of the patent: **06.01.2021**
(21) Application number: 16868144.3
(22) Date of filing: 22.11.2016
(51) Int. Cl.: G08B 13/19, G08B 13/196, G08B 25/10

(54) **THERMAL MOTION DETECTOR AND THERMAL CAMERA**
THERMISCHER BEWEGUNGSDETEKTOR UND WÄRMEBILDKAMERA
DÉTECTEUR THERMIQUE DE MOUVEMENT ET CAMÉRA THERMIQUE

(30) Priority: 23.11.2015 US 201562258570 P
(43) Date of publication of application: 03.10.2018
(73) Proprietor: ESSENCE SECURITY INTERNATIONAL (E.S.I.) LTD., 4672530 Herzlia Pituach (IL)
(72) Inventor: AMIR, Ohad, 4642300 Herzlia (IL)
(74) Representative: Borsano, Corrado
(86) International application number: PCT/IL2016/051256
(87) International publication number: WO 2017/090034

(56) References cited:
- GB-A- 2 257 257
- US-A1- 2003 174 210
- US-A1- 2005 151 851
- US-A1- 2008 136 914
- US-A1- 2008 136 914
- US-A1- 2012 105 229
- US-B1- 7 471 334

## Description

### BACKGROUND

The present invention, in some embodiments thereof, relates to capturing thermal images in a monitored location, and, more specifically, but not exclusively, to capturing thermal images in a monitored location using a thermal imaging sensor triggered to operate by a motion detection indication from a motion detector.

Security system are in wide use for protecting homes, properties, facilities, institutes and/or any premises against potential intruders.

The security system employ a wide range of detection and alert measures deployed in a monitored site in order to detect, alert, capture and/or record of the potential intruder. In order to provide reliable protection and detection, the detection devices and measures must be ready to detect, alert, capture and/or record a potential intrusion while armed, i.e. the security system is active.

US 2005/151851 A1 relates to the field of cameras, and more specifically to motion triggered cameras. The camera includes a housing, a lens, a flash, and a motion detector, such as an infra-red sensor to activate the camera by detecting heat and motion.

US 7 471 334 B1 pertains to motion sensing digital cameras for monitoring and photographing wildlife and more specifically pertains to such a camera that includes a sleep mode for conserving the camera's battery life between shots.

US 2008/136914 A1 relates generally to surveillance systems for protecting property and, more particularly, to mobile integrated self-contained surveillance systems providing motion detection, audio and video capture, wireless transmission of surveillance images and audio to a recipient.

### SUMMARY

According to a first embodiment of the present invention there is provided a system of capturing thermal images in a monitored location, comprising one or more motion detectors for detecting a motion in a monitored location, one or more of the motion detectors being a thermal motion sensor, and a thermal imaging sensor, operating in a low power mode, triggered by a motion detection indication to enter an operational mode in order to capture one or more thermal image of at least a part of said monitored location. The motion detection indication is generated by the one or more motion detectors at a detection of a motion in the monitored location.

Both the motion detector(s) and the thermal image sensor of a thermal camera are adapted to operate in a common IR spectrum. The ability of the thermal image sensor to capture the object (for example, a person, an animal, etc.) that triggered the motion detection indication may therefore significantly increase. Moreover, by maintain the thermal imaging sensor in the low power mode its power consumption may be significantly reduced. This may allow, for example, increase battery life in case the thermal image sensor and/or the thermal camera are battery operated.

According to a second embodiment of the present invention there is provided a method of capturing thermal images in a monitored location, comprising:
- Receiving a motion detection indication from one or more motion detectors distributed to detect a motion is a monitored location. The one or more motion detectors comprising one or more thermal motion sensors adapted for operation at infrared (IR) wavelengths.
- Instructing a thermal imaging sensor to switch from a low power mode to an operational mode.
- Capturing one or more thermal images of at least a part of the monitored location.

Both the motion detector(s) and the thermal image sensor of a thermal camera are adapted to operate in a common IR spectrum. The ability of the thermal image sensor to capture the object (for example, a person, an animal, etc.) that triggered the motion detection indication may therefore significantly increase. Moreover, by maintain the thermal imaging sensor in the low power mode its power consumption may be significantly reduced. This may allow, for example, increase battery life in case the thermal image sensor and/or the thermal camera are battery operated.

According to some aspects of the first and/or second embodiments of the invention, the one or more motion detectors are adapted for operation at infrared (IR) wavelengths.

According to some aspects of the first and/or second embodiments of the invention, the thermal imaging sensor is adapted for operation at wavelengths in a range from 5 to 6 micrometer, capable of capturing the one or more thermal images independent of light conditions in the monitored location. This allows the thermal imaging sensor to capture the thermal image(s) independently of lighting conditions with no need for an external light source.

According to some aspects of the first and/or second embodiments of the invention, the one or more motion detectors are adapted for operation at wavelengths in a range from 5 to 6 micrometer, said at least one thermal motion sensor is capable of detecting said motion independent of light conditions in said monitored location. This allows the motion detectors to detect the motion independently of lighting conditions.

Optionally, according to some aspects of the first and/or second embodiments of the invention, the one or more motion detectors comprise one or more motion sensors that are members selected from a group consisting of: a passive infrared (PIR) sensor, a sound sensor, a magnetic sensor and/or a microwave sensor. This may allow using a plurality of different sensors using a common system, infrastructure and/or deployment.

According to some aspects of the first and/or second embodiments of the invention, the motion detection comprises detecting one or more motion patterns. This may allow improved monitoring of typical movement patterns in the monitored location in order to, for example, avoid false positive detection, avoid redundant analysis and/or operation in case the motion is triggered by authorized movements in the monitored location and/or the like.

According to some aspects of the first and/or second embodiments of the invention, the thermal imaging sensor comprises one or more wakeup components operational while the thermal imaging sensor is operating in the low power mode. The one or more wakeup components trigger the thermal imaging sensor to enter the operational mode. This may allow maintaining the thermal imaging sensor in the low power mode (and reduce power consumption) while fully available and ready to enter the operational mode immediately on reception of the motion detection.

According to some aspects of the first and/or second embodiments of the invention, the thermal imaging sensor is powered by a power supply separated from a power supply of the one or more motion detectors. This may serve to allow more flexibility in the power distribution for the motion detectors that may typically be constantly powered on and the thermal imaging sensor that may typically be power off.

According to some aspects of the first and/or second embodiments of the invention, the motion detection indication is transmitted by the one or more motion detectors to the thermal imaging sensor over one or more interfaces that are members of a group consisting of: a wired interface and/or a wireless interface. This allows for flexibility in connecting the motion sensor(s) and the thermal imaging sensor. For example, cost and complexity tradeoffs may be evaluated and implemented for each deployment.

Optionally, according to some aspects of the first and/or second embodiments of the invention, one or more of the motion detectors comprises a transmitter for transmitting the motion detection indication to one or more monitoring control units. The transmitter is resumed from the low power mode to the operational mode after the motion detection indication is generated. This may allow making the monitoring control unit(s) aware of the detected motion that may be indicative, for example, of an intrusion to the monitored location. The transmitter may typically be turned off to preserve power.

Optionally, according to some aspects of the first and/or second embodiments of the invention, a transmitter is coupled to the thermal imaging sensor for transmitting the one or more captured thermal images to one or more monitoring control units. The transmitter is resumed from the low power mode to the operational mode after the motion detection indication is generated. This may allow making the monitoring control unit(s) aware of the detected motion that may be indicative, for example, of an intrusion to the monitored location. The transmitter may typically be turned off to preserve power.

Optionally, according to some aspects of the first and/or second embodiments of the invention, a recorder stores the one or more thermal images. The recorder is resumed from the low power mode to the operational mode after the motion detection indication is generated. This may allow reviewing the thermal image(s) at a later time, for example, during an event analysis and/or investigation. The recorder may typically be turned off to preserve power.

Optionally, according to some aspects of the first and/or second embodiments of the invention, one or more additional thermal imaging sensors are located in the monitored location to capture one or more additional thermal images of the monitored location following the motion detection indication. The additional thermal imaging sensors may provide better coverage and/or improved view range of the monitored location.

### BRIEF DESCRIPTION OF THE SEVERAL VIEWS OF THE DRAWINGS

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

In the drawings:
FIG. 1 is a flowchart of an exemplary process for capturing thermal images in a monitored location, according to some embodiments of the present invention;
FIG. 2 is a schematic illustration of an exemplary system for capturing thermal images in a monitored location, according to some embodiments of the present invention; and
FIG. 3 is a schematic illustration of an exemplary deployment of a thermal imaging system for capturing thermal images in a monitored location, according to some embodiments of the present invention.

### DETAILED DESCRIPTION

The present invention, in some embodiments thereof, relates to capturing thermal images in a monitored location, and, more specifically, but not exclusively, to capturing thermal images in a monitored location using a thermal imaging sensor triggered to operate by a motion detection indication from a motion detector. The invention is defined by the claims.

According to some embodiments of the present invention, there are provided methods and systems for capturing one or more thermal images in a monitored location using a power efficient thermal imaging system capable of providing high quality thermal images with no dependency on visible light conditions. The thermal imaging system comprises one or more motion detectors, in particular low power motion detectors deployed to detect a motion and/or a presence (herein after motion) in the monitored location and/or part thereof. The motion detectors may include one or more motion sensors, in particular a thermal motion sensor(s) adapted to operate in the Infra-Red (IR) spectrum at wavelengths of 5 to 6 micrometer. The thermal motion sensor(s) may be capable of detecting the motion caused by an object(s) and/or an entity(s) in the monitored location by detecting the IR flux radiated by the object(s) and/or an entity(s) themselves (black body radiation) avoiding the need for an external light source. Optionally, the motion detector(s) include one or more other motion sensors, for example, a Passive IR (PIR) sensor, a vibration sensor, a microwave sensor, a sound sensor, a glass break sensor, a magnetic sensor and/or the like that are capable to detect the motion at a wide range of visible light conditions, i.e. independently of the lighting conditions. The thermal imaging system also includes a thermal camera comprising a thermal imaging sensor, for example, an IR imaging sensor adapted to operate at wavelengths ranging from about 5 to about 6 micrometer. The operation of the thermal imaging sensor is based on depicting temperature difference between objects and/or between objects and the environment in the scene (field of view of the thermal imaging sensor) by capturing and differentiating between the IR wavelengths radiated by the object(s) (black body radiation). The thermal imaging sensor may therefore capture one or more thermal images depicting the scene of the monitored location at high quality independent of the visible lighting conditions with no need for a light source.

While the motion detector(s) continuously monitor the monitored location, during an idle time, i.e., no motion detection, most components of the thermal camera operate in a low power mode, for example, an off mode, a standby mode, a sleep mode and/or the like. Upon detection of the motion in the monitored location (that may indicate of a possible intrusion), the motion detector(s) may generate a motion detection indication that may be transmitted to the thermal camera over one or more wired interfaces and/or wireless interfaces. The wired interfaces may include, for example, a discrete line, a relay line, a serial interface, a proprietary wired connection and/or the like. The wireless interface may include, for example, an RF interface, ZigBee, Bluetooth, a proprietary wireless interface and/or the like. The motion detector(s) may further transmit the motion detection indication to one or more on-site and/or off-site monitoring control unit(s), for example, a security system, a client terminal (a mobile device, a Smartphone, a computer, etc.) and/or the like. The motion detector(s) may be configured to identify one or more motion and/or presence patterns in the monitored location in order to generate the motion detection indication. This may allow discriminating false positive motion detections caused by, for example, a pet, a moving object (a fan, a curtain and/or the like) and/or the like.

The thermal camera comprises a receiver and a wakeup module that are active while the other components of the thermal camera are in the low power mode. The wakeup module may be implemented through one or more hardware circuits and/or through one or more processors and/or controllers executing one or more software modules. The processor(s) may operate in the low power mode during the idle time with only the wakeup module active and resume to the operational mode by the wakeup module at reception of the motion detection indication. The wakeup module is adapted to receive through the receiver the motion detection indication from the motion detector(s) and trigger the thermal imaging sensor to resume an operational mode. After the thermal imaging sensor enters the operational mode, the thermal imaging sensor may capture one or more thermal images and/or a video sequence of the scene covered by the thermal imaging sensor.

The thermal camera further includes a transmitter for transmitting the captured thermal image(s) to the monitoring control unit(s). The thermal camera may transmit the captured thermal images during and/or after the detection event.

Optionally, the thermal camera comprises a recorder for recording the thermal image(s) and/or the video sequence in a non-volatile storage media, for example, a Flash array, a hard drive, a memory stick, a memory card and/or the like.

The thermal imaging system may present significant advantages compared to currently existing security imaging systems. There are several challenges involved with installing and maintaining a security system deployed to detect and alert of possible intrusions, in particular a security system that further captures images of the scene in an event of detection of the possible intrusion. One challenge relates to the ability to capture reliably the images of the object and/or entity whose motion triggered the motion detection. A second challenge relates to capturing images of the scene in case of detection of the possible intrusion regardless of the light conditions at the monitored location. The security system may be active (armed) during any time of the day, i.e. daytime and/or night. The security system may further be deployed to monitor high and/or low illumination locations, for example, dark rooms, dark premises and/or the like. The security system should therefore be able to provide high quality images for all or at least a wide range of light conditions. Yet another challenge relates to installation and/or maintenance of the security system that may require laying out a significant wiring infrastructure for either powering the security system components and/or for connecting communication interfaces between the security system components. It may be therefore desired to minimize the wiring infrastructure by making the security system components stand-alone components powered from batteries and/or communicating over wireless interfaces. It is also desired to extend as much as possible the period between maintenance actions of the security system components, for example, batteries replacement.

By adapting both the motion detector(s) having the thermal motion sensor(s) and the thermal image sensor of the thermal camera to operate in a common IR spectrum, the robustness of the thermal imaging system may be significantly increased compared against existing security imaging systems. The existing security imaging systems may employ various detecting techniques for example, PIR, vibration, microwave, sound, glass break, magnetic contact and/or the like to detect the motion. However, the imaging sensor used by the existing security imaging systems may not be able to depict reliably the monitored location to capture the source cause of the motion. For example, the existing security system(s) may be deployed in a dark location with one or more motion detectors, for example, a PIR sensor and a standard (visible light) camera that may not be able to capture the motion source cause in the dark. The thermal imaging system on the other hand, has the thermal detector(s) and the thermal camera both adapted to operate in the same light spectrum (at wavelength of 5 to 6 micrometer). This may significantly increase the certainty that the thermal camera captures the object(s) and/or entity(s) whose motion triggered the motion detection at the motion detector(s). The thermal imaging system having the thermal imaging sensor adapted to operate with no light source may be capable of capturing and providing high quality images with no dependence on the visible light conditions. For example, in low light conditions, the thermal imaging system does not require switching on a light source (either in the visible light spectrum and/or the IR spectrum) in order to capture the images. This presents a major advantage over the existing security imaging systems that may use standard imaging sensors and/or near IR imaging sensors (operating at a wavelength of 1 micrometer). Both the visible light imaging sensors as well as the near IR imaging sensors may require a light source, either in the visible light spectrum and/or in the IR spectrum to illuminate the monitored location while capturing the images. Avoiding use of the light source, that may be a major power consumer, may significantly reduce the overall power consumption of the thermal imaging system making it feasible to operate the thermal imaging system from batteries. The battery operated thermal imaging system may be easier to install as it may reduce and/or avoid the need for wiring and/or power provisions. In addition, the thermal imaging system may have longer operational time before requiring maintenance, for example, batteries replacement. Moreover, avoiding the use of the light source may allow reducing the size of the thermal imaging system thus allowing for smaller space, weight and size requirements during the installation of the thermal imaging system. In addition, avoiding switching on the light source, the thermal imaging system may generate a silent alarm whereas the existing security imaging systems using the standard imaging sensors coupled with the light source turned on for capturing the scene may reveal to the potential intruder that he was detected.

By maintaining most of the components of the thermal imaging system in the low power mode during the idle time, the power consumption of the thermal imaging system may be significantly reduced compared to the existing security imaging systems in which the imaging system may be constantly active. Since the idle time may be, by far, much longer than the time duration of a detection event, most of the time the major components of the thermal imaging system operate in the low power mode thus significantly reducing the overall power consumption. The components of the thermal imaging system that are continuously active are extremely low power devices consuming very little power thus having very little impact on the overall power consumption of the thermal imaging system. This may further reduce the power consumption of the thermal imaging system. This may allow operating the thermal imaging system from the batteries that in turn may lead to a significantly simpler installation and/or longer operational time before maintenance.

In addition, since the motion detectors may be configured to generate the motion detection indication only at identification of the motion pattern(s), the thermal imaging system may avoid false positive detection and reduce and/or avoid switching into operation at false detections thus further reducing the overall power consumption.

Before explaining at least one embodiment of the invention in detail, it is to be understood that the invention is not necessarily limited in its application to the details of construction and the arrangement of the components and/or methods set forth in the following description and/or illustrated in the drawings and/or the Examples. The invention is capable of other embodiments or of being practiced or carried out in various ways.

As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wire line, optical fiber cable, RF, etc., or any suitable combination of the foregoing.

Computer program code for carrying out operations for aspects of the present invention may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems) and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

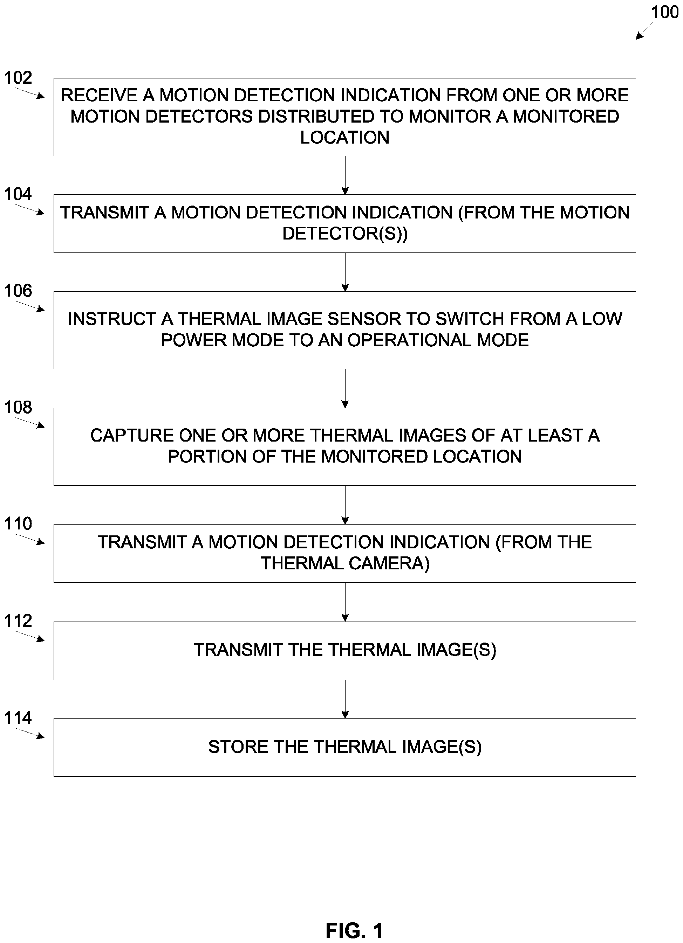

Reference is now made to FIG. 1, which is a flowchart of an exemplary process for capturing thermal images in a monitored location, according to some embodiments of the present invention. A process 200 for capturing one or more thermal images in a monitored location is directed to reduce a power consumption of the thermal imaging system. The thermal imaging system comprises one or more motion detectors, in particular low power motion sensors deployed in the monitored location and a thermal imaging sensor. The motion detector(s) continuously monitor the monitored location and may generate an indication at detection of a motion and/or a presence in the monitored location. The motion detection indication may be transmitted to one or more monitoring control units, for example, a security system located on site and/or at a remote location. In an idle state, i.e. while no motion is detected in the monitored location, the thermal imaging sensor operates in a low power mode and may be triggered to an operational mode by the motion detection indication received from the motion detector(s). Once triggered, the thermal imaging sensor may capture one or more thermal images and/or a video sequence. The thermal image(s) may be transmitted in real time and/or after the detection event to the monitoring control unit(s). Optionally, the thermal image(s) may be stored in a local medium for post event analysis.

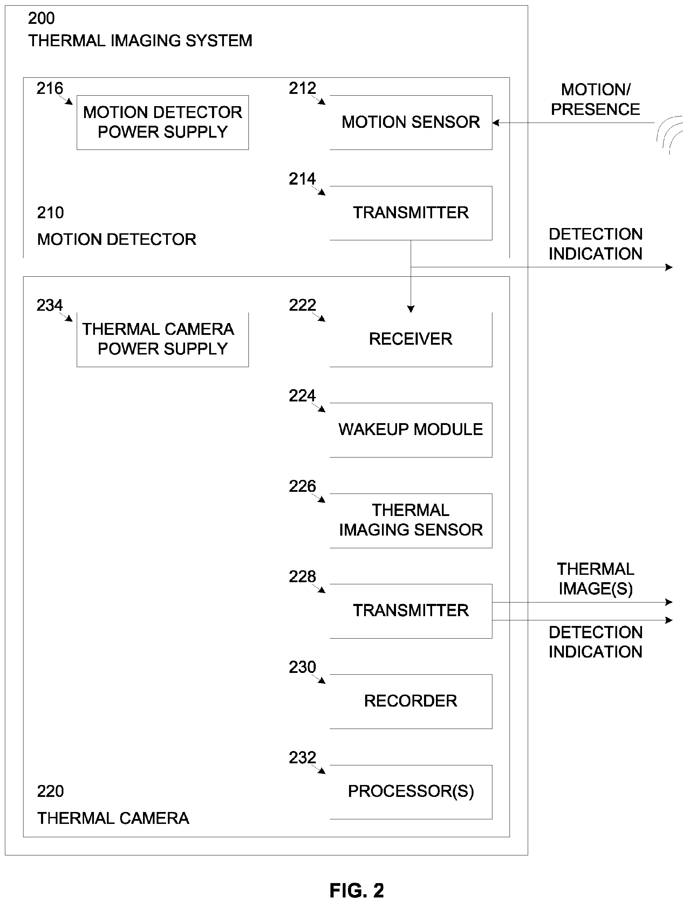

Reference is also made to FIG. 2, which is a schematic illustration of an exemplary system for capturing thermal images in a monitored location, according to some embodiments of the present invention. A thermal imaging system 200 deployed in the monitored location includes one or more motion detectors 210 and a thermal camera 220. The motion detector(s) 210 deployed to detect motion and/or presence in the monitored location comprises one or more motion sensors 212 and a transmitter 214. The motion sensor 212, in particular a thermal motion sensor operating at IR wavelengths in the range of about 5 to about 6 micrometer may be capable of detecting the motion caused by an object(s) and/or an entity(s) in the monitored location by detecting the IR flux radiated by the object(s) and/or an entity(s) themselves. Operating in the 5 to 6 micrometer IR light spectrum is based on black body radiation avoiding the need for an external light source. Optionally, motion sensor 212 is, for example, a PIR sensor, a vibration sensor, a microwave sensor, a sound sensor, a glass break sensor, a magnetic sensor and/or the like may typically be a low power consumption device. In particular, motion sensor 212 is capable of detecting a motion and/or a presence independent of lighting conditions by employing one or more technologies, for example, temperature difference detection, vibration detection, sound detection and/or the Doppler Effect. Motion detector 210 is powered by a motion detector power supply 216, for example, one or more batteries, a proprietary power source and/or the power grid.

Thermal camera 220 is deployed in the monitored location such that it depicts at least a portion of the monitored location. The thermal camera 220 includes a receiver 222, a wakeup module 224, a thermal imaging sensor 226 and a transmitter 228. Thermal camera 220 is powered by a thermal camera power supply 234, for example, one or more batteries, a proprietary power source and/or the power grid. Thermal imaging sensor 226 may capture the thermal image(s) and/or video sequence at a wide range of visible lighting conditions while maintaining high image quality as thermal imaging sensor 226 employs one or more thermal imaging IR imaging sensors operating at wavelengths ranging from 5 to 6 micrometer. The thermal imaging of the thermal imaging sensor 226 is based on the thermal operation range for depicting temperature difference between objects and/or between the object(s) and the environment in the scene (field of view of the monitored location) covered by the thermal imaging sensor 226. Thermal imaging sensor 226 is capable of capturing and differentiating the IR radiation (at wavelengths in the range from 5 to 6 micrometer) that is radiated by the object(s) themselves and therefore no light source is required while capturing the thermal image(s). The image quality of the captured thermal image(s) may therefore be independent of the visible lighting conditions.

Upon detection of the motion and/or presence in the monitored location the motion sensor 212, motion detector 210 may generate a motion detection indication to thermal camera 220. The motion detection indication may be transmitted by transmitter 214 of motion detector 210 to receiver 222 of thermal camera 220. Transmitter 214 may be adjusted to operate in a low power mode during the idle time, i.e. while no motion is detected in the monitored location. The low power mode may be, for example, an off mode, a standby mode, a sleep mode and/or the like. Following the detection of the motion and/or presence, motion sensor 212 may trigger transmitter 214 to resume from the low power mode to an operational mode.

Transmitter 214 and receiver 222 are adapted to communicate with each other over one or more interfaces, for example, a wired interface and/or a wireless interface. The wired interface may include, for example, a discrete line, a relay line, a serial interface, a proprietary wired connection and/or the like. The wireless interface may include, for example, a radio frequency (RF) interface, ZigBee, Bluetooth, a proprietary wireless interface and/or the like. The motion detection indication may be, for example, a voltage level change, a current pulse and/or the like when using, for example, the discrete line, the relay line, the proprietary wired connection and/or the like. The motion detection indication may be, for example, a command, a message and/or the like when using, for example, the serial interface, the proprietary wired connection and/or the wireless interface.

Optionally, motion detector(s) 210 transmit the motion detection indication to the monitoring control unit(s) over one or more of the interfaces provided by the transmitter 214.

One or more of the components of thermal camera 220, optionally all the components except receiver 222 and wakeup module 224, may operate in the low power mode during idle time, i.e. while no motion is detected in the monitored location. Wakeup module 224 may include one or more hardware circuits that may be low power consuming circuits. Once the motion detection indication is received by wakeup module 224 from receiver 222, wakeup module 224 may trigger thermal imaging sensor 226 to resume from the low power mode to the operational mode in order to capture the thermal image(s) and/or the video sequence.

Transmitter 228 may be used to transmit the captured thermal image(s) and/or the captured video sequence to the monitoring control unit(s). Transmitter 228 may be adjusted to operate in the low power mode during the idle time. Following reception of the motion detection indication, wakeup module 224 may trigger transmitter 228 to resume from the low power mode to the operational mode. Transmitter 228 may be adapted to operate over one or more wired and/or a wireless interfaces. The wired interface may include, for example, a Local area Network (LAN), a serial interface, a controller area network (CAN), a proprietary wired connection and/or the like. The wireless interface may include, for example, a Wireless LAN (WLAN) such as Wi-Fi™, ZigBee, Bluetooth, a cellular network, a proprietary wireless interface and/or the like. Transmitter 228 may be operating in the low power mode during the idle time and triggered by wakeup module 224 to transmit the thermal image(s) captured by thermal imaging sensor 226.

Optionally, thermal camera 220 transmits the motion detection indication to the monitoring control unit(s) over one or more of the interfaces provided by transmitter 228. Thermal camera 220 may transmit the motion detection indication to the monitoring control unit(s) using the same interface(s) of transmitter 228 used to transmit the thermal image(s) and/or thermal camera 220 may use other interface(s) of transmitter 228.

One or more of motion detectors 210 may be mechanically coupled to thermal camera 220. Motion detector(s) 210 and thermal camera 220 may be integrated in a single housing. In another embodiment, motion detector(s) 210 and thermal camera 220 may be each contained in a separate housing that may be mechanically attached to each other. Additionally and/or alternatively, motion detector(s) 210 and thermal camera 220 are contained by separate housings that may be collocated in the same location and/or distributed at different locations in the monitored location. Transmitter 214 and receiver 222 may be adapted according to the location, proximity and/or assembly of motion detector(s) 210 with respect to thermal camera 220. For example, in case motion detector(s) 210 and thermal camera 220 are integrated in a single housing, the transmitter 214 may utilize the discrete line driven to receiver 222 to provide the motion detection indication. In case motion detector(s) 210 and thermal camera 220 are separated from each other and are not located in close proximity, transmitter 214 may utilize the relay line and/or the RF interface to provide the motion detection indication.

Optionally, thermal camera 220 includes a recorder 230 for recording the thermal image(s) and/or the video sequence in a non-volatile storage media, for example, a Flash array, a hard drive, a memory stick, a memory card and/or the like. Recorder 230 may be adjusted to operate in the low power mode during the idle time. Following reception of the motion detection indication, wakeup module 224 may trigger transmitter 230 to resume from the low power mode to the operational mode.

Optionally, thermal camera 220 includes one or more processors 232, for example, a processor, a microcontroller and/or the like that execute one or more software modules. Processor(s) 232 may be configured to manage operation of one or more of the components of thermal camera 220, for example, receiver 222, thermal imaging sensor 226, transmitter 228 and/or recorder 230. Each of the software modules comprises a plurality of program instruction executed by processor(s) 232 from a program store, for example, a Read Only Memory (ROM), a Random Access Memory (RAM), a Flash array, a memory card and/or the like. Processor(s) 232 may be adjusted to operate in the low power mode during the idle time. Following reception of the motion detection indication, wakeup module 224 may trigger processor(s) 232 to resume from the low power mode to the operational mode.

In case thermal camera 220 includes processor(s) 232, wakeup module 224 may be implemented as a software module. Processor(s) 232 may be operating in the low power mode during the idle time executing only wakeup module 224. At reception of the motion detection indication, receiver 222 may trigger wakeup module 224, for example, through an interrupt line to resume processor(s) 232 to the operational mode. Processor(s) 232 in turn may instruct thermal imaging sensor 226, transmitter 228 and/or recorder 230 to resume to the operational mode.

Optionally, one or more characteristics of the captured image(s) and/or the captured video sequence, for example, a quality, a resolution, a size, a frame rate and/or the like are adjusted by at thermal camera 220. The captured image(s) may be adjusted according to transmission capabilities of transmitter 228, for example, available transmission interface(s), a throughput, a bandwidth, an available transmission power and/or the like. Moreover, the captured image(s) may be adjusted according to the capabilities of recorder 230, for example, a storage capacity, a write speed and/or the like. Thermal camera 220 may be adapted such that one or more characteristics of thermal imaging sensor 226, for example, an image quality, an image resolution, a frame rate and/or the like are adjusted according to one or more capabilities of transmitter 228 and/or recorder 230. Additionally and/or alternatively, specifically in case thermal camera 220 comprises processor(s) 232, the captured image(s) may be manipulated by processor(s) 232 prior to transmission and/or storage in order to adjust the thermal image(s) and/or video sequence to the capabilities of transmitter 228 and/or recorder 230.

Optionally, one or more of motion detectors 210 and thermal camera 220 are powered from the same power supply, i.e. the motion detector power supply 216 is integrated with thermal camera power supply 234. The integrated power supply may be powered, for example, from one or more batteries, from a proprietary power source and/or from the power grid. The integrated power supply feeding both motion detector(s) 210 and thermal camera 220 may be of particular benefit in case motion detectors 210 and thermal camera 220 are mechanically coupled. However, in some scenarios it may be desired to have motion detector power supply 216 and thermal camera power supply 234 separated to avoid excessive power consumption of one component affect the operation of the other component.

Optionally, thermal imaging system 200 includes one or more additional thermal cameras 220. Additional thermal camera(s) 220 may provide, for example, increased coverage area of the monitored location, overlapping coverage areas in the monitored location, additional viewing angles of the monitored location and/or part thereof and/or the like.

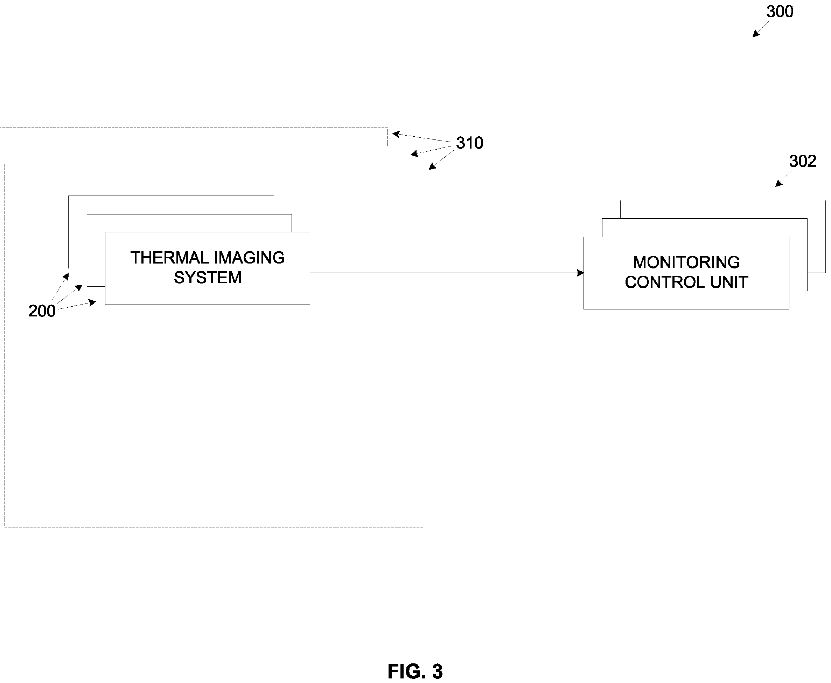

Reference is now made to FIG. 3, which is a schematic illustration of an exemplary deployment of a thermal imaging system for capturing thermal images in a monitored location, according to some embodiments of the present invention. A monitored site 300 may comprise one or more monitored locations 310, for example, a room, an indoor space, a premise, an outdoor space and/or the like. Each of monitored locations 310 may be monitored by one or more thermal imaging systems such as thermal imaging systems 200 each executing a process such as process 100. Each of thermal imaging systems 200 may connect to one or more on-site and/or off-site monitoring control units 302. Monitoring control unit(s) 302 may include, for example, a security system, a server, a client terminal and/or the like. The client terminal may include, for example, a mobile device, a Smartphone, a tablet, a computer and/or the like. Monitoring control unit(s) 302 may be adapted to (for example, executing a monitoring software application) to monitor alerts received from thermal imaging systems 200 and/or view the thermal image(s) received from thermal imaging systems 200. Monitoring control unit(s) 302 may be further adapted to control thermal imaging systems 200, for example, arm/disarm thermal imaging systems 200 and/or part thereof. Monitoring control unit(s) 302 may also be adapted to change one or more settings of thermal imaging systems 200, for example, characteristic(s) of thermal imaging sensor 226, setting(s) of the motion detection indication and/or the like. Naturally, thermal imaging systems 200 is installed, adapted and/or configured to operate with monitoring control unit(s) 302. For example, in case monitoring control unit 302 is an on-site security system, thermal imaging system(s) 200 may have a transmitter such as transmitter 228 adapted to communicate over WLAN with the on-site security system. As another example, in case monitoring control unit 302 is an off-site Smartphone, transmitter 228 may be adapted to communicate over the cellular network to communicate with the off-site Smartphone.

Reference is made once again to FIG. 1. Process 100 is executed by system 200 deployed to monitor motion and/or presence in a monitored site such as monitored site 300 and communicate with one or more monitoring control units 302.

As shown at 102, process 200 starts with thermal camera 220 receiving a motion detection indication from one or more of motion detectors 210. The motion detector 210 is typically a low power consumption device that continuously monitors the monitored location 310. The motion detection indication transmitted by the transmitter 214 may be received by the wakeup module 224 through the receiver 222.

The motion detector(s) 210 may be configured to identify one or more motion and/or presence patterns (herein after motion patterns) in the monitored location 310. For example, the motion pattern may be set to differentiate between motion and/or presence of a person and motion and/or presence of a pet. The motion pattern(s) may be further set to discriminating false positive motion detections caused by a moving object, for example, a fan, a curtain and/or the like. The motion pattern(s) may further be adjusted to detect a continuous motion and/or a repeated motion. Applying the motion pattern(s) may increase certainty that the motion detection is a caused by an actual intruder(s) and avoid false positive detection.

As shown at 104, one or more of the motion detector(s) 210 may transmit the motion detection indication to the monitoring control unit(s) 302. The motion detector(s) 210 may transmit the motion detection indication to the monitoring control unit(s) 302 using the same interface(s) of the transmitter 214 used to transmit the motion detection indication to the thermal camera 220 and/or the motion detector(s) 210 may use other interface(s) provided by the transmitter 214.

As shown at 106, the wakeup module 224 instructs the thermal imaging sensor 226 to resume the operational mode. In order to reduce the power consumption of the thermal camera 220, most if not all the components of the thermal camera 220 including the thermal imaging sensor 226, are set to low power mode during the idle time, with the exception of at least the wakeup module 224 and the receiver 222. The wakeup module 224 therefore instructs the thermal imaging sensor 226 to resume from the low power mode to the operational mode. In case the wakeup module 224 is implemented as a hardware circuit(s), the wakeup module 224 may drive a line configured to restore the thermal imaging sensor 226 to the operational mode. In case the wakeup module 224 is implemented as the software module executed by the processor(s) 232, the wakeup module 224 may use one or more connectivity interfaces between the processor(s) 232 and the thermal imaging sensor 226 to instruct the thermal imaging sensor 226 to resume the operational mode. The connectivity interfaces may include the line configured to restore the thermal imaging sensor 226 to the operational mode as well as other means, for example, restoring power to the thermal imaging sensor 226. Another example may be accessing one or more registers and/or a bus interface of the thermal imaging sensor 226 to instruct the thermal imaging sensor 226 to resume to the operational mode.

As shown at 108, the thermal imaging sensor 226 captures one or more thermal images. Optionally, the imaging sensor 226 captures a video sequence comprising a plurality of thermal images. The characteristic(s) of the thermal imaging sensor 226, for example, the resolution, the image quality, the frame rate and/or the like may be adjusted according to one or more capabilities of transmitter 228 and/or the recorder 230. The capabilities of transmitter 228 may include, for example, the available transmission interface(s), the bandwidth, the throughput, the available transmission power and/or the like. The capabilities of the recorder 230 may include, for example, the capabilities of the recorder 230, for example, the storage capacity, the write speed and/or the like.

Since the thermal imaging sensor 226 may employ thermal hardware and thermal imaging techniques, the captured thermal image(s) may depict the scene of the monitored location 310 and/or part thereof (according to deployment of the thermal imaging sensor 226) with no dependence on the visible light conditions. The thermal image(s) may provide high quality images even when captured at extreme visible light conditions, for example, at full daylight, at night, in complete darkness, in a closed unlit location and/or the like and provide high quality images.

As shown at 110, which is an optional step, the motion detection indication may be transmitted to the monitoring control unit(s) 302 by the thermal camera 220 using transmitter 228. This may be done in case the motion detection indication is not sent to the monitoring control unit(s) 302 by the motion detector(s) 210 as shown at step 104. Additionally and/or alternatively, the motion detection indication may be transmitted to the monitoring control unit(s) 302 by both the motion detector(s) 210 and the thermal camera 220 to increase the robustness of the thermal imaging system 200 and hence of the overall monitoring control unit(s) 302.

As shown at 112, the thermal camera 220 transmits one or more of the captured thermal images to the monitoring control unit(s) 302 through transmitter 228. The thermal image(s) may comprise one or more still images and/or the video sequence. Optionally, the thermal image(s) are manipulated prior to transmission by the processor(s) 232 in order to adjust the thermal image(s) according to the capability(s) of transmitter 228. For example, the processor(s) 232 may process the thermal image(s) to reduce their size and/or resolution to allow transmitter 228 to transmit the thermal image(s) over one or more interfaces having a limited bandwidth. As another example, the processor(s) 232 may reduce a frame rate of the captured video sequence to reduce its overall size. The manipulation of the thermal images may further include compression and/or transmission of only selected frame(s).

As shown at 114, the recorder 230 stores one or more of the captured thermal images in the local storage media. The thermal image(s) may be stored in order to allow be transmitted 228 to transmit the thermal image(s) during and/or after the detection event. Optionally, the stored thermal image(s) are collected by physically accessing the thermal camera 220. For example, the recorder 230 may store the captured thermal image(s) in a detachable memory media, for example, a memory card, a memory stick and/or the like. In another embodiment, the recorder 230 and/or the processor(s) 232 provide an external interface, for example, a serial port, a universal serial bus (USB) port and/or the like for accessing the storage media in order to retrieve the stored thermal image(s).

Optionally, the thermal camera 220 is configured to periodically resume the operational mode and capture one or more thermal images even if no motion detection indication was received by wakeup module 224. The periodically captured thermal image(s) may be transmitted by transmitter 228 to the monitoring control unit(s) 302 and/or stored by the recorder 230 in the storage media.

The flowchart and block diagrams in the Figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

The descriptions of the various embodiments of the present invention have been presented for purposes of illustration, but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

It is expected that during the life of a patent maturing from this application many relevant systems, methods and computer programs will be developed and the scope of the term commerce information and price is intended to include all such new technologies a priori.

As used herein the term "about" refers to ± 10 %.

The terms "comprises", "comprising", "includes", "including", "having" and their conjugates mean "including but not limited to". This term encompasses the terms "consisting of" and "consisting essentially of".

The phrase "consisting essentially of" means that the composition or method may include additional ingredients and/or steps, but only if the additional ingredients and/or steps do not materially alter the basic and novel characteristics of the claimed composition or method.

As used herein, the singular form "a", "an" and "the" include plural references unless the context clearly dictates otherwise. For example, the term "a compound" or "at least one compound" may include a plurality of compounds, including mixtures thereof.

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment of the invention may include a plurality of "optional" features unless such features conflict.

Throughout this application, various embodiments of this invention may be presented in a range format. It should be understood that the description in range format is merely for convenience and brevity and should not be construed as an inflexible limitation on the scope of the invention. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals there between.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination or as suitable in any other described embodiment of the invention. Certain features described in the context of various embodiments are not to be considered essential features of those embodiments, unless the embodiment is inoperative without those elements.

Although the invention has been described in conjunction with specific embodiments thereof, it is evident that many alternatives, modifications and variations will be apparent to those skilled in the art. Accordingly, it is intended to embrace all such alternatives, modifications and variations that fall within the scope of the appended claims.

## Claims

1. A system (200) of capturing thermal images in a monitored location, comprising:
at least one motion detector (210) for detecting a motion in a monitored location, the at least one motion detector being a thermal motion detector the at least one motion detector (210) operating in an infrared (IR) spectrum suited to detection of black body radiation radiated from a person, which represents the IR flux radiated by the person themselves; and
a thermal imaging sensor (220) triggerable by a motion detection indication to switch from a low power mode to an operational mode in order to capture at least one thermal image of at least a part of said monitored location, said motion detection indication is generated by a motion sensor (212) of said at least one motion detector (210) upon a detection of a motion in said monitored location,
wherein the thermal imaging sensor (220) also operates in the IR spectrum suited to detection of black body radiation radiated from the person so that the at least one motion detector(210) and the thermal image sensor (220) operate in the common IR spectrum to increase an ability to capture the thermal image of the person that triggered the motion detection indication.

2. The system (200) of claim 1, wherein said at least one motion detector (210) is adapted for operation at infrared (IR) wavelengths.

3. The system (200) of claim 1, further comprising said at least one motion detector (210) comprises at least one motion sensor (212) that is a member selected from a group consisting of: a passive infrared (PIR) sensor, a sound sensor, a magnetic sensor and a microwave sensor.

4. The system (200) of claim 1, wherein said motion detection (210) comprises detecting at least one motion pattern.

5. The system (200) of claim 1, wherein said thermal imaging sensor (220) comprises at least one wakeup component (224) operational while said thermal imaging sensor (220) is operating in said low power mode, said at least one wakeup component (224) triggers said thermal imaging sensor (220) to enter said operational mode.

6. The system (200) of claim 1, wherein said thermal imaging sensor (220) is powered by a power supply (234) separated from a power supply (216) of said at least one motion detector (210).

7. The system (200) of claim 1, wherein said motion detection indication is transmitted by said at least one motion detector (210) to said thermal imaging sensor (220) over at least one interface (214) that is a member selected from a group consisting of: a wired interface and a wireless interface.

8. The system (200) of claim 1, wherein said at least one motion detector (210) further comprising a transmitter (214) for transmitting said motion detection indication to at least one monitoring control unit (302), said transmitter (214) is resumed from said low power mode to said operational mode after said motion detection indication is generated.

9. The system (200) of claim 1, further comprising a transmitter (228) coupled to said thermal imaging sensor for transmitting said at least one captured thermal image to at least one monitoring control unit (302), said transmitter (228) is resumed from said low power mode to said operational mode after said motion detection indication is generated.

10. The system (200) of claim 1, further comprising a recorder (230) for recording said at least one thermal image, said recorder (230) is resumed from said low power mode to said operational mode after said motion detection indication is generated.

11. The system (200) of claim 1, further comprising at least one additional said thermal imaging sensor located in said monitored location to capture at least one additional thermal image of said monitored location following said motion detection indication.

12. The system (200) of any one of claims 1 to 11, wherein the low power mode is an off mode, standby mode or sleep mode.

13. The system (200) of any one of claims 1 to 12 wherein the at least one motion detector(s) (210) having at least thermal motion sensor(s) (212) and the thermal image sensor (226) of the thermal camera (220) are adapted to operate in a common IR spectrum.

14. A method of capturing thermal images in a monitored location, comprising:
receiving a motion detection indication from at least one motion detector (210) distributed to detect a motion in a monitored location, the at least one motion detector (210) comprising at least one thermal motion sensor (212) adapted for operation at infrared (IR) wavelengths, suited to detection of black body radiation radiated from a person, which represents the IR flux radiated by the person themselves;
instructing a thermal imaging sensor (220) to switch from a low power mode to an operational mode; and
capturing at least one thermal image of at least a part of said monitored location;
wherein the thermal imaging sensor (220) also operates in the IR spectrum suited to detection of black body radiation radiated from the person so that the at least one motion detector (210) and the thermal image sensor (220) operate in the common IR spectrum to increase an ability to capture the thermal image of the person that triggered the motion detection indication.

15. The method of claim 14, wherein said motion detection (210) comprises detecting at least one motion pattern.

## Patentansprüche

1. Ein System (200) zur Erfassung von Wärmebildern an einem überwachten Ort, umfassend
mindestens einen Bewegungsmelder (210) zum Erfassen einer Bewegung an einem überwachten Ort, wobei der mindestens eine Bewegungsmelder ein thermischer Bewegungsmelder ist
den mindestens einen Bewegungsmelder (210), der in einem Infrarot-(IR)-Spektrum arbeitet, das zur Erfassung der von einer Person abgestrahlten Schwarzkörperstrahlung geeignet ist, die den von der Person selbst abgestrahlten IR-Fluss darstellt; und
einen Wärmebildsensor (220), der durch eine Bewegungserfassungsanzeige auslösbar ist, um von einem Niedrigleistungsmodus in einen Betriebsmodus umzuschalten, um mindestens ein Wärmebild von mindestens einem Teil des überwachten Ortes zu erfassen, wobei die Bewegungserfassungsanzeige durch einen Bewegungssensor (212) des mindestens einen Bewegungsdetektors (210) bei der Erfassung einer Bewegung in dem überwachten Ort erzeugt wird,
wobei der Wärmebildsensor (220) auch in dem IR-Spektrum arbeitet, das zur Erfassung der von der Person abgestrahlten Schwarzkörperstrahlung geeignet ist, so dass der mindestens eine Bewegungsdetektor (210) und der Wärmebildsensor (220) im gemeinsamen IR-Spektrum arbeiten, um die Fähigkeit zur Erfassung des Wärmebildes der Person, die die Bewegungserfassungsanzeige ausgelöst hat, zu erhöhen.

2. das System (200) nach Anspruch 1, bei dem der mindestens eine Bewegungsmelder (210) für den Betrieb bei Infrarot (IR)-Wellenlängen ausgelegt ist.

3. Das System (200) nach Anspruch 1, das ferner den mindestens einen Bewegungsmelder (210) umfasst, umfasst mindestens einen Bewegungssensor (212), der ein Mitglied ist, das aus einer Gruppe ausgewählt ist, die besteht aus: einem passiven Infrarotsensor (PIR-Sensor), einem Schallsensor, einem Magnetsensor und einem Mikrowellensensor.

4. das System (200) nach Anspruch 1, wobei die Bewegungserfassung (210) die Erfassung mindestens eines Bewegungsmusters umfasst.

5. System (200) nach Anspruch 1, bei dem der Wärmebildsensor (220) mindestens eine Aufweckkomponente (224) aufweist, die betriebsbereit ist, während der Wärmebildsensor (220) in dem Niedrigleistungsmodus arbeitet, wobei die mindestens eine Aufweckkomponente (224) den Wärmebildsensor (220) auslöst, um in den Betriebsmodus einzutreten.

6. System (200) nach Anspruch 1, bei dem der Wärmebildsensor (220) von einer Stromversorgung (234) gespeist wird, die von einer Stromversorgung (216) des mindestens einen Bewegungsdetektors (210) getrennt ist.

7. System (200) nach Anspruch 1, bei dem die Bewegungserfassungsanzeige von dem mindestens einem Bewegungsdetektor (210) an den Wärmebildsensor (220) über mindestens eine Schnittstelle (214) übertragen wird, bei der es sich um ein Mitglied handelt, das aus einer Gruppe ausgewählt wird, die besteht aus: einer drahtgebundenen Schnittstelle und einer drahtlosen Schnittstelle.

8. System (200) nach Anspruch 1, bei dem der mindestens eine Bewegungsdetektor (210) ferner einen Sender (214) zum Übertragen der Bewegungserfassungsanzeige an mindestens eine Überwachungssteuereinheit (302) aufweist, wobei der Sender (214) nach der Erzeugung der Bewegungserfassungsanzeige von dem Niedrigleistungsmodus in den Betriebsmodus zurückgesetzt wird.

9. System (200) nach Anspruch 1, das ferner einen Sender (228) aufweist, der mit dem Wärmebildsensor gekoppelt ist, um das mindestens eine erfasste Wärmebild an mindestens eine Überwachungssteuereinheit (302) zu übertragen, wobei der Sender (228) nach der Erzeugung der Bewegungserkennungsanzeige von dem Niedrigleistungsmodus in den Betriebsmodus zurückgesetzt wird.

10. Das System (200) nach Anspruch 1 umfasst ferner einen Rekorder (230) zum Aufzeichnen des mindestens einen Wärmebildes, wobei der Rekorder (230) nach der Erzeugung der Bewegungserkennungsanzeige aus dem Niedrigleistungsmodus in den Betriebsmodus zurückgesetzt wird.

11. Das System (200) nach Anspruch 1 umfasst ferner mindestens einen zusätzlichen Wärmebildsensor, der sich an dem überwachten Ort befindet, um mindestens ein zusätzliches Wärmebild des überwachten Ortes nach der Bewegungserkennungsanzeige zu erfassen.

12. Das System (200) nach einem der Ansprüche 1 bis 11, wobei der Energiesparmodus ein Aus-Modus, Standby-Modus oder Schlaf-Modus ist.

13. System (200) nach einem der Ansprüche 1 bis 12, wobei der mindestens eine Bewegungsmelder (210) mit mindestens einem thermischen Bewegungssensor (212) und der Wärmebildsensor (226) der Wärmebildkamera (220) so ausgelegt sind, dass sie in einem gemeinsamen IR-Spektrum arbeiten.

14. Ein Verfahren zum Erfassen von Wärmebildern an einem überwachten Ort, umfassend:
Empfangen einer Bewegungserfassungsanzeige von mindestens einem Bewegungsmelder (210), der verteilt ist, um eine Bewegung an einem überwachten Ort zu erfassen, wobei der mindestens eine Bewegungsmelder (210) mindestens einen thermischen Bewegungssensor (212) umfasst, der für den Betrieb bei Infrarot-(IR)-Wellenlängen geeignet ist, die zur Erfassung der von einer Person abgestrahlten Schwarzkörperstrahlung geeignet sind, die den von der Person selbst abgestrahlten IR-Fluss darstellt;
Anweisung an einen Wärmebildsensor (220), von einem Niedrigleistungsmodus in einen Betriebsmodus umzuschalten; und
Erfassung mindestens eines Wärmebildes von mindestens einem Teil des überwachten Ortes;
wobei der Wärmebildsensor (220) auch in dem IR-Spektrum arbeitet, das zur Erfassung der von der Person abgestrahlten Schwarzkörperstrahlung geeignet ist, so dass der mindestens eine Bewegungsdetektor (210) und der Wärmebildsensor (220) im gemeinsamen IR-Spektrum arbeiten, um die Fähigkeit zur Erfassung des Wärmebildes der Person, die die Bewegungserfassungsanzeige ausgelöst hat, zu erhöhen.

15. Verfahren nach Anspruch 14, wobei die Bewegungserfassung (210) das Erfassen mindestens eines Bewegungsmusters umfasst.

## Revendications

1. Système (200) de capture d'images thermiques dans un endroit surveillé, comprenant :
au moins un détecteur de mouvement (210) pour détecter un mouvement dans un endroit surveillé, l'au moins un détecteur de mouvement étant un détecteur de mouvement thermique, l'au moins un détecteur de mouvement (210) fonctionnant dans un spectre infrarouge (IR) approprié pour la détection d'un rayonnement de corps noir émis depuis une personne, qui représente le flux IR émis par la personne elle-même ; et
un capteur d'imagerie thermique (220) pouvant être déclenché par une indication de détection de mouvement pour passer d'un mode basse puissance à un mode fonctionnel afin de capturer au moins une image thermique d'au moins une partie dudit endroit surveillé, ladite indication de détection de mouvement est générée par un capteur de mouvement (212) dudit au moins un détecteur de mouvement (210) lors d'une détection d'un mouvement dans ledit endroit surveillé,
dans lequel le capteur d'imagerie thermique (220) fonctionne également dans le spectre IR approprié pour la détection d'un rayonnement de corps noir émis depuis la personne de sorte que l'au moins un détecteur de mouvement (210) et le capteur d'images thermiques (220) fonctionnent dans le spectre IR commun pour augmenter une capacité de capture de l'image thermique de la personne qui a déclenché l'indication de détection de mouvement.

2. Système (200) selon la revendication 1, dans lequel ledit au moins un détecteur de mouvement (210) est adapté pour un fonctionnement à des longueurs d'onde infrarouge (IR).

3. Système (200) selon la revendication 1, comprenant en outre ledit au moins un détecteur de mouvement (210) qui comprend au moins un capteur de mouvement (212) qui est un organe choisi dans un groupe constitué d'un capteur infrarouge passif (PIR), d'un capteur de son, d'un capteur magnétique et d'un capteur à hyperfréquences.

4. Système (200) selon la revendication 1, dans lequel ladite détection de mouvement (210) comprend la détection d'au moins un schéma de mouvement.

5. Système (200) selon la revendication 1, dans lequel ledit capteur d'imagerie thermique (220) comprend au moins un composant de réveil (224) fonctionnel tandis que ledit capteur d'imagerie thermique (220) fonctionne dans ledit mode basse puissance, ledit au moins un composant de réveil (224) déclenche ledit capteur d'imagerie thermique (220) pour entrer dans ledit mode fonctionnel.

6. Système (200) selon la revendication 1, dans lequel ledit capteur d'imagerie thermique (220) est alimenté par un bloc d'alimentation (234) séparé d'un bloc d'alimentation (216) dudit au moins un détecteur de mouvement (210).

7. Système (200) selon la revendication 1, dans lequel ladite indication de détection de mouvement est transmise par ledit au moins un détecteur de mouvement (210) audit capteur d'imagerie thermique (220) sur au moins une interface (214) qui est un organe choisi dans un groupe constitué d'une interface filaire et d'une interface sans fil.

8. Système (200) selon la revendication 1, dans lequel ledit au moins un détecteur de mouvement (210) comprend en outre un émetteur (214) pour transmettre ladite indication de détection de mouvement à au moins une unité de commande de surveillance (302), ledit émetteur (214) est repris dudit mode basse puissance audit mode fonctionnel après la génération de ladite indication de détection de mouvement.

9. Système (200) selon la revendication 1, comprenant en outre un émetteur (228) couplé audit capteur d'imagerie thermique pour transmettre ladite au moins une image thermique capturée à au moins une unité de commande de surveillance (302), ledit émetteur (228) est repris dudit mode basse puissance audit mode fonctionnel après la génération de ladite indication de détection de mouvement.

10. Système (200) selon la revendication 1, comprenant en outre un enregistreur (230) pour enregistrer ladite au moins une image thermique, ledit enregistreur (230) est repris dudit mode basse puissance audit mode fonctionnel après la génération de ladite indication de détection de mouvement.

11. Système (200) selon la revendication 1, comprenant en outre au moins un capteur d'imagerie thermique supplémentaire situé dans ledit endroit surveillé pour capturer au moins une image thermique supplémentaire dudit endroit surveillé suite à ladite indication de détection de mouvement.

12. Système (200) selon l'une quelconque des revendications 1 à 11, dans lequel le mode basse puissance est un mode désactivé, un mode attente ou un mode veille.

13. Système (200) selon l'une quelconque des revendications 1 à 12, dans lequel l'au moins un détecteur de mouvement (210) ayant au moins un ou des capteurs de mouvement thermique (212) et le capteur d'images thermiques (226) de la caméra thermique (220) sont adaptés pour fonctionner dans un spectre IR commun.

14. Procédé de capture d'images thermiques dans un endroit surveillé, comprenant :
la réception d'une indication de détection de mouvement depuis au moins un détecteur de mouvement (210) distribué pour détecter un mouvement dans un endroit surveillé, l'au moins un détecteur de mouvement (210) comprenant au moins un capteur de mouvement thermique (212) adapté pour un fonctionnement à des longueurs d'onde infrarouge (IR), approprié pour la détection d'un rayonnement de corps noir émis depuis une personne, qui représente le flux IR émis par la personne elle-même ;
l'instruction à un capteur d'imagerie thermique (220) de passer d'un mode basse puissance à un mode fonctionnel ; et
la capture d'au moins une image thermique d'au moins une partie dudit endroit surveillé ;
dans lequel le capteur d'imagerie thermique (220) fonctionne également dans le spectre IR approprié pour la détection d'un rayonnement de corps émis depuis la personne de sorte que l'au moins un détecteur de mouvement (210) et le capteur d'images thermiques (220) fonctionnent dans le spectre IR commun pour augmenter une capacité de capture de l'image thermique de la personne qui a déclenché l'indication de détection de mouvement.

15. Procédé selon la revendication 14, dans lequel ladite détection de mouvement (210) comprend la détection d'au moins un schéma de mouvement.
